# EUROPEAN PATENT SPECIFICATION

(11) **EP 4 003 048 B1**
(45) Date of publication and mention of the grant of the patent: **01.11.2023**
(21) Application number: 20743654.4
(22) Date of filing: 17.07.2020
(51) Int. Cl.: A23J 3/14, A23J 3/16, A23J 3/18, A23J 3/22, A23J 3/26

(54) **PROCESS FOR MANUFACTURING A FORMED MEAT ANALOGUE PRODUCT**
VERFAHREN ZUR HERSTELLUNG EINES GEFORMTEN FLEISCHANALOGPRODUKTS
PROCÉDÉ DE FABRICATION D'UN PRODUIT ANALOGUE DE VIANDE FORMÉ

(30) Priority: 31.07.2019 US 201962880981 P
(43) Date of publication of application: 01.06.2022
(73) Proprietor: Société des Produits Nestlé S.A., 1800 Vevey (CH)
(72) Inventor: SHAMAILA, Mawele, 78224 SINGEN (DE); GADDIPATI, Sanyasi, BEACHWOOD, Ohio 44122 (US); SOMERVILLE, Jeremy, Twinsburg, OH 44087 (US); ERLE, Ulrich Johannes, CLEVELAND, OH 44113 (US)
(74) Representative: Györffy, Béla
(86) International application number: PCT/EP2020/070287
(87) International publication number: WO 2021/018633

(56) References cited:
- EP-A1- 1 759 593
- EP-A1- 3 508 067
- EP-A2- 1 493 337
- WO-A1-2012/075088
- WO-A1-2019/120960
- US-A1- 2009 208 612
- US-A1- 2009 291 188

## Description

The present invention relates to a process for manufacturing a formed meat analogue product, which preferably has a visual aspect of a marbled meat product.

Today's consumer demand more and more meat analogue products as substitutes for real meat based products in their diets. Reasons for this trend are varying from ecological, to economical, ethical and more health conscious considerations. Typically, such meat analogue products are plant protein extrudates, which are mixed with binders, oil and fat and various colorings and flavorings. However, there are still many limitations as to product quality such in taste, texture and overall visual appearance. Today the trend is towards meat replacement products, which mimic raw meat, meaning that the consumer buys these products 'raw' and processes/cooks them in the kitchen in the same way as he would with a corresponding raw meat product. Hence, the consumer expects those meat analogue products also to behave in the same way as raw meat when it comes to the taste, texture, and appearance of those products during the preparation and transformation during a cooking process.

Several solutions exist today and are for example described in WO2015/153666(A1) and WO2017/070303(A1). EP 3 508 067 A1 discloses a method for producing a vegetable meat substitute. EP 1 759 593 A1 discloses a minced meat analogue that is composed of composite strands that contain a plurality of proteinaceous fibres and an interstitial material. With today's available meat alternative products, however, many limitations still exist and there is still a clear and persisting need in the art to improve the quality of such meat analogue products, as to taste, texture and particularly also to the visual aspects of such products, as to before, during and after the cooking process.

The object of the present invention is to improve the state of the art and to provide an improved solution as to meat analogue products and their process of manufacture. In particular, the object of the present invention is to provide a formed, raw meat analogue product and its process of manufacture. The product requires to be cooked like a real raw meat product before consumption.

The object of the present invention is to provide formed meat analogue products, which have an improved quality, when compared to corresponding real meat products, particularly in respect to the visual aspect related to the products before, during and after the cooking process.

The object of the present invention is achieved by the subject matter of the independent claims. The dependent claims further develop the idea of the present invention.

Accordingly, the present invention provides a process for manufacturing a formed meat analogue product comprising the steps of:
- making a structured fat composition;
- making a structured plant protein composition;
- mixing the structured fat composition with the structured plant protein composition to result in a meat analogue base;
- casting the meat analogue base into a form;

wherein the structured fat composition comprises a fat in combination with at least 10% starch and/or inulin, and optionally water;
wherein the structured fat composition comprises particles having an average particle size of 2-20mm; and wherein the structured plant protein composition comprises a textured plant protein, a binder and optionally a flavoring compound and/or a coloring compound.

The inventors surprisingly found that when the process of manufacturing a formed meat analogue product is made in at least two steps, where the making of the structured plant protein part is separate from the making of the structured fat part, and where the structured fat part is first frozen and then comminuted into small pieces before mixing the two parts together for forming the meat analogue product, such analogue plant based products can be obtained, that very much visually resemble real meat products, in that they have a very similar marbled aspect of the fat part within the structured protein part. Upon cooking, the fat part melts in a similar way as in real meat products and thereby mimics the cooking experience for the consumer when replacing a formed real meat product with a formed meat analogue product of the present invention. Furthermore, as the structured fat composition of the present invention is not just fat but also contains for example significant amounts of starch and water, the overall content of fat and saturated fatty acids in a formed product can be reduced in comparison to real meat products, and this without compromising the visual appearance of a well marbled product. This constitutes a further benefit of the present invention.

### Brief Description of the Figures

Figure 1: Raw sausages cut in half. A: Raw meat sausage as reference. Meat analogue sausage with structured fat composition from Example 1 are B: with Sample 1; C: with Sample 2; and D: with Sample 3.
Figure 2: Same sausages as in Figure 1 A: and B: after being cooked at 100°C for 12 minutes.

### Detailed Description of the invention

The present invention pertains to a process for manufacturing a formed meat analogue product comprising the steps of:
- making a structured fat composition;
- making a structured plant protein composition;
- mixing the structured fat composition with the structured plant protein composition to result in a meat analogue base;
- casting the meat analogue base into a form;

wherein the structured fat composition comprises a fat in combination with at least 10% starch and/or inulin, and optionally water;
wherein the structured fat composition comprises particles having an average particle size of 2-20mm; and wherein the structured plant protein composition comprises a textured plant protein, a binder and optionally a flavoring compound and/or a coloring compound.

Preferably, the present invention pertains to a process for manufacturing a formed meat analogue product, wherein the formed meat analogue product is raw.

"Meat analogue product", sometimes also called meat alternative, meat substitute, mock meat, faux meat, imitation meat or vegetarian meat, refers herein to a food product, exclusively made from vegetarian ingredients, and which has qualities as to appearance, taste, flavor, and texture as the corresponding real meat product.

"Formed" means that the meat analogue product has been formed, e.g. via molding, pressing or casting. The form may be a sausage or sausage type, a burger patty type, a ball like a meat ball etc.

"Structured" in the present invention means that there is a certain molecular structure and molecular network present in for example the structured fat composition and the structured plant protein composition. The composition is not liquid, but the individual molecules in a structured composition are holding together and are forming a form-stable matrix. "Average particle size" is defined herein as meaning that 90% of all particles of a batch fall within a particular defined size range in [mm]. The size of the particles were herein determined by sieving through appropriate sieves or a mesh. "Textured plant protein" is referred in the literature also as 'texturized plant' or 'texturized vegetable protein' (TVP). It typically refers to a defatted plant protein flour, such as for example defatted soy flour, which is processed e.g. by extrusion into chunks or flakes.

The term "raw" for the present invention means 'un-cooked'.

In an embodiment of the present process for manufacturing a formed meat analogue product, the making a structured fat composition comprises the steps of:
- melting the fat at a temperature above 25°C;
- adding the at least 10% starch and/or inulin and optionally water to the melted fat;
- mixing the melted fat with the at least 10% starch and/or inulin and
   optionally water at a temperature between 25°C and 85°C to result in a fat composition;
- cooling the fat composition to a temperature of below 25°C for the fat composition to solidify;
- freezing the solidified fat composition to a sub-zero °C temperature;
- reducing the frozen solidified fat composition to particles having an average particle size of 2-20mm;
wherein the fat is solid at a temperature of 25°C or below.

The frozen solidified fat composition can be reduced to particles having an average particle size of 2-20mm by grinding, shredding, crumbling, milling, crushing or comminution of the frozen solid fat composition.

The structured fat composition of the formed meat analogue product of the present invention comprises particles having an average particle size of 2-20mm. In a preferred embodiment of the present invention, the particles have an average particle size of 5-15mm. The presence of those particles help to significantly improve the forming of the visual aspect of the marbled meat analogue product.

In an embodiment of the present process for manufacturing a formed meat analogue product, the making a structured plant protein composition comprises the steps of:
- preparing a wet textured plant protein by wetting a dry textured plant protein with water or by wet extruding a plant protein;
- making the binder by mixing a cellulose, an un-textured plant protein isolate, a gelatinized starch, a plant fiber, or a combination thereof, with water into a paste;
- mixing the wet textured plant protein and the binder with optionally adding a flavoring and/or a coloring compound and/or an oil which is liquid at 25°C, to result in the structured plant protein composition.

"Preparing a wet textured plant protein" can be achieved by mixing a typical commercially available dry textured plant protein product with water or by directly using a textured plant protein resulting from a wet extrusion process, where the extruded textured plant protein was not dried.

"Gelatinized starch" can be sourced directly as gelatinized starch or can be achieved by cooking native starch with water.

"Un-textured plant protein isolate" refers to a protein isolate, which did not undergo a texturing process such as for example through extrusion.

A "paste" refers herein to a soft plastic composition, for example made with the ingredients and water, which constitute the binder in the present invention.

Preferably, the present invention pertains to a process for manufacturing a formed meat analogue product, which does not comprise an ingredient from an animal origin.

In one embodiment of the present invention, the textured plant protein is selected from soy bean protein, pea protein, lentil protein, lupin protein, wheat gluten, and a combination thereof. Further appropriate protein sources may be proteins from beans such as green, red or black beans, chickpeas, fava beans, spirulina, or from chia, quinoa or hemp seeds.

In one embodiment of the present invention, the fat is a vegetable fat selected from coconut fat, palm fat, shea butter, and a combination thereof.

In one preferred embodiment of the present invention, the starch of the structured fat composition is a physically processed starch. Preferably, the starch has a bulk density of below 50 g/100ml, preferably a bulk density from 8-40 g/100ml, more preferably from 10-30 g/100ml, even more preferably from 11-20 g/100ml. The starch can be selected from potato starch, corn starch, rice starch and/or tapioca starch, for example.

It has been observed by the inventors that physically processed starch provides much better results in the present invention than natural, non-physically processed starch. This is particularly the case where the starch has been physically processed in such a way that its relative volume becomes increased and in parallel, its bulk density becomes lower. By increasing the volume of the starch molecules, the starch has a larger surface area and this will absorb a higher amount of fat and oil. Furthermore, this low density starch has also a much lower viscosity when cooked in comparison to regular native starch, and will better melt when heated in the presence of moisture. It will not leave any residual starch traces on a meat analogue product after the cooking process. And the inventors have particularly observed that processed starch with a bulk density below 50 g/100ml, and particularly even below 40 g/100ml, or below 30 g/100g or even below 20 g/100ml provide even further better results as to the melting behaviour in the process of the present invention.

In one embodiment of the present invention, the structured fat composition comprises at least 20% fat. Preferably, the structured fat composition comprises at least 30% fat. In a further preferred embodiment, the structured fat composition does not comprise more than 90% fat, preferably not more than 80% fat, more preferably not more than 70%, even more preferably not more than 60% fat. Advantageously, this allows to actually reducing the effective amount of fat in the meat analogue products as to what a consumer may optically perceive from the presence of the structured fat composition. Hence, a 'fat' marbled meat analogue product has effectively less fat than a similarly fat marbled real meat product. It is a healthier choice.

In the present invention, the structured fat composition comprises at least 10% starch. Preferably, the structured fat composition does not comprise more than about 40% starch, preferably even not more than 35% starch. In a further embodiment of the present invention, the starch is gelatinized and comprises water.

In the present invention, the structured fat composition comprises at least 10% inulin, preferably at least 15% inulin. Preferably, the structured fat composition does not comprise more than about 40% inulin, preferably even not more than 35% inulin.

In one embodiment of the present invention, the formed meat analogue product comprises at least 5% of the structured fat composition and at least 50% of the structured plant protein composition. Preferably, the formed meat analogue product comprises at least 10% of the structured fat composition and at least 50% of the structured plant protein composition.

Preferably, the formed meat analogue product of the present invention does not comprise more than 50% of the structured fat composition, more preferably not more than 40% or even not more than 30%.

In one preferred embodiment, the formed meat analogue product has a visual aspect of a marbled product. This visual aspect reflects the fat and fat distribution as found in corresponding real meat products.

Preferably, after a heat treatment at 80°C for at least 15 minutes of the formed meat analogue product of the present invention, the marbled aspect of the formed meat analogue product disappears. This should again mimic the process and visual effect when cooking a real fat-marbled formed meat product.

In one important embodiment, the formed meat analogue product of the present invention is raw and requires cooking before consumption. The meat analogue product of the present invention is intended to mimic raw meat products, which are commercialized as such and are subsequently cooked by the consumer or a professional food out-let. Hence, the formed meat analogue product of the present invention is raw, meaning that it has not previously been cooked. It is commercialized raw and required to be cooked thereafter by a consumer or a direct food provider.

In one embodiment of the present invention, the formed meat analogue product is a patty, a ball or a sausage.

Those skilled in the art will understand that they can freely combine all features of the present invention disclosed herein, described for the different embodiments of the present invention. Further advantages and features of the present invention are apparent from the figures and examples.

### Example 1: Preparation of structured fat compositions

Three different fat compositions were prepared with the ingredients as specified below:
Sample 1: 80% coconut fat, 20% processed starch Aero-Myl 33 (bulk density of 11-16g/100ml);
Sample 2: 20% palm fat, 40% inulin, 40% of wetted gelatinized potato starch;
Sample 3: 60% coconut fat, 20% inulin, 20% water.

Potato starch was wetted and gelatinized by adding water to native potato starch (50:50 of starch and water) and cooking the mixture at 85°C for 15 min.

Batches of 0.5kg per sample were prepared each as follows:
The fat was melted in a Stephan mixer at a temperature of 55°C. Thereafter, the starch, and/or inulin, and/or water, respectively, were added to the melted fat into the mixer. The composition was mixed at a mixing speed of between 500-1000 rpm for 15 minutes and at a temperature of 55°C. Thereafter, the composition was filled into a mold and slowly cooled down to 22°C in order to let the fat composition to solidify. The solid fat composition was removed from the mold and put in a freezer at -18°C to freeze and for storage. Before further processing and use of the fat composition for the making of formed meat analogue products, the frozen fat compositions were removed from the freezer, comminuted in a bench-top grinder and sieved through appropriate sieves to result in particles having an average size from 5-10mm.

### Example 2: Preparation of structured plant protein composition

A standard structured plant protein composition was prepared with the following ingredients as listed below:
15% of textured soy protein, 6% vegetable oil, 1% salt, 2% seasonings, and 10% of a binder composition with methyl-cellulose, non-textured plant protein isolate and starch as ingredients, and the rest being water.

Batches of 4.5kg structured plant protein composition were prepared as follows:
Commercially sourced textured soy protein was wetted with part of the water. In parallel, a binder was prepared by mixing the methyl-cellulose with non-textured soy protein isolate, starch and rest of the water. Oil, salt and the seasonings were added to the binder composition, which was mixed into a paste. Thereafter, the wetted textured soy protein was added to the paste and everything was thoroughly mixed and stored at 4°C before further processing in making the formed meat analogue products.

### Example 3: Preparation of formed meat analogue product

Each 0.5kg of comminuted structured fat composition from Example 1 was each mixed with 4.5kg of structured plant protein composition from Example 2 and mixed under low shear condition in a pilot scale commercial mixer. Thereafter, the mixture was used to fill hydrocolloid based sausage casings. The thus obtained sausages were kept at 4°C until further analysis.

### Example 4: Analysis of meat analogue sausages

The sausages obtained from Example 3 were assessed as to their visual appearance before and after cooking in a pan.

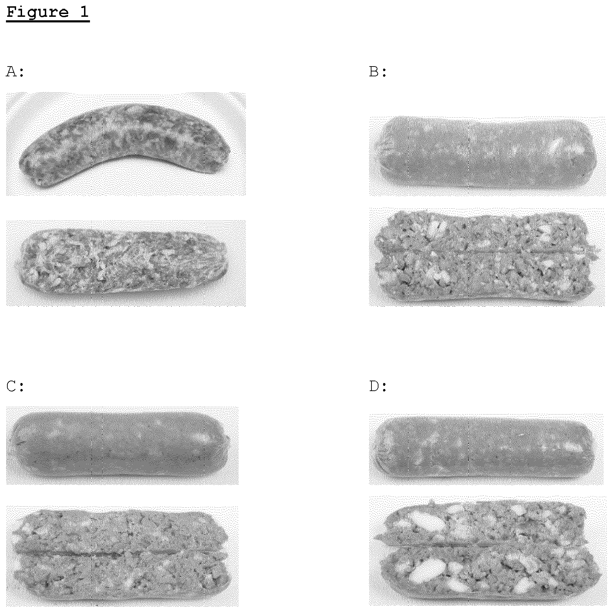

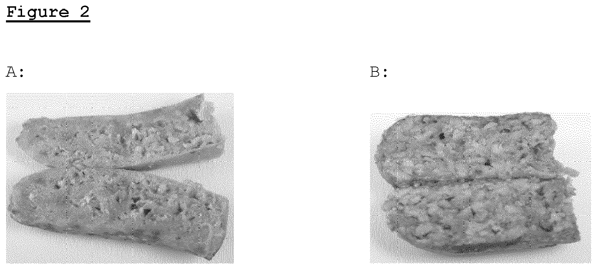

Before cooking, the sausages made according to the process described above resembled very much real raw meat European sausages. Some comparisons are shown e.g. in Figure 1. Particularly, the meat-less or meat analogue sausages comprised two intermixed compositions or parts, the first part being the structured plant protein composition mimicking the meat-part of the real meat sausages. This part has a same color as the meat part and has a marbled aspect due to the second part, which in real sausages is the fat part. In the sausages of the present invention, this second part is the structured fat composition, having a similar color as the fat part in real meat sausages, and being intermixed with the first part in such a way as to provide the visual aspect of a marbled real meat sausage. Upon cooking of the meat analogue sausages of the present invention in a pan or on a grill, the structured fat analogue composition completely melts and the visual aspect of the marbled product disappears. This very much corresponds what is can be observed when cooking a raw real meat sausage in a pan or on a grill. Examples of cooked meat analogue products of the present invention are shown in Figure 2.

In particular, the results have shown that the marbling effect of the present examples is visible from out-side the sausages, i.e. before cutting them in half, and also from the inside, i.e. when cut open. Both samples 2 and 3 were rated satisfactory with an internal scoring of 3/5, when compared to corresponding real meat sausages. Sample 1 was rated best with a score of 5/5. It very well visually resembles a real meat product and it would be very difficult for a consumer to differentiate it from such real meat products if not directly compared one-to-one.

## Claims

1. A process for manufacturing a formed meat analogue product comprising the steps of:
- making a structured fat composition;
- making a structured plant protein composition;
- mixing the structured fat composition with the structured plant protein composition to result in a meat analogue base;
- casting the meat analogue base into a form;
wherein the structured fat composition comprises a fat in combination with at least 10% starch and/or inulin, and optionally water;
wherein the structured fat composition comprises particles having an average particle size of 2-20mm; and wherein the structured plant protein composition comprises a textured plant protein, a binder and optionally a flavoring compound and/or a coloring compound.

2. The process for manufacturing a formed meat analogue product according to claim 1, wherein the making a structured fat composition comprises the steps of:
- melting the fat at a temperature above 25°C;
- adding the starch and/or inulin and optionally water to the melted fat;
- mixing the melted fat with the starch and/or inulin and optionally water at a temperature between 25°C and 85°C to result in a fat composition;
- cooling the fat composition to a temperature of below 25°C for the fat composition to solidify;
- freezing the solidified fat composition to a sub-zero °C temperature;
- reducing the frozen solidified fat composition to particles having an average particle size of 2-20mm;
wherein the fat is solid at a temperature of 25°C or below.

3. The process for manufacturing a formed meat analogue product according to claim 1 or 2, wherein the making a structured plant protein composition comprises the steps of:
- preparing a wet textured plant protein by wetting a dry textured plant protein with water or by wet extruding a plant protein;
- making the binder by mixing a cellulose, an un-textured plant protein isolate, a gelatinized starch, a plant fiber, or a combination thereof, with water into a paste;
- mixing the wet textured plant protein and the binder with optionally adding a flavouring compound, a coloring compound and/or an oil which is liquid at 25°C, to result in the structured plant protein composition.

4. The process for manufacturing a formed meat analogue product according to one of the preceding claims, wherein the formed meat analogue product does not comprise an ingredient from an animal origin.

5. The process for manufacturing a formed meat analogue product according to one of the preceding claims, wherein the textured plant protein is selected from soy bean protein, pea protein, lentil protein, lupin bean protein, wheat gluten, and a combination thereof.

6. The process for manufacturing a formed meat analogue product according to one of the preceding claims, wherein the fat is a vegetable fat selected from coconut fat, palm fat, shea butter, and a combination thereof.

7. The process for manufacturing a formed meat analogue product according to one of the preceding claims, wherein the starch of the structured fat composition is a physically processed starch.

8. The process for manufacturing a formed meat analogue product according to claim 7, wherein the starch has a bulk density of below 50 g/100ml, preferably a bulk density from 8-40 g/100ml, more preferably from 10-30 g/100ml, even more preferably from 11-20 g/100ml.

9. The process for manufacturing a formed meat analogue product according to one of the preceding claims, wherein the structured fat composition comprises at least 20% fat.

10. The process for manufacturing a formed meat analogue product according to one of the preceding claims, wherein the formed meat analogue product comprises at least 5% of the structured fat composition and at least 50% of the structured plant protein composition.

11. The process for manufacturing a formed meat analogue product according to one of the preceding claims, wherein the formed meat analogue product has a visual aspect of a marbled product.

12. The process for manufacturing a formed meat analogue product according to claim 11, wherein after a heat treatment at 80°C for at least 15 minutes, the marbled aspect of the formed meat analogue product disappears.

13. The process for manufacturing a formed meat analogue product according to one of the preceding claims, wherein the formed meat analogue product is raw and requires cooking before consumption.

14. The process for manufacturing a formed meat analogue product according to one of the preceding claims, wherein the formed meat analogue product is a patty, a ball or a sausage.

## Patentansprüche

1. Verfahren zum Fertigen eines geformten Fleischanalogprodukts, umfassend die Schritte:
- Herstellen einer strukturierten Fettzusammensetzung;
- Herstellen einer strukturierten Pflanzenproteinzusammensetzung;
- Mischen der strukturierten Fettzusammensetzung mit der strukturierten Pflanzenproteinzusammensetzung, um eine Fleischanalogbasis zu ergeben;
- Gießen der Fleischanalogbasis in eine Form;
wobei die strukturierte Fettzusammensetzung ein Fett in Kombination mit mindestens 10 % Stärke und/oder Inulin und wahlweise Wasser umfasst;
wobei die strukturierte Fettzusammensetzung Partikel, die eine durchschnittliche Partikelgröße von 2-20 mm aufweisen, umfasst; und wobei die strukturierte Pflanzenproteinzusammensetzung ein texturiertes Pflanzenprotein, ein Bindemittel und wahlweise eine Aromastoffverbindung und/oder eine Farbstoffverbindung umfasst.

2. Verfahren zum Fertigen eines geformten Fleischanalogprodukts nach Anspruch 1, wobei das Herstellen einer strukturierten Fettzusammensetzung die Schritte umfasst:
- Schmelzen des Fetts bei einer Temperatur über 25 °C;
- Zugeben der Stärke und/oder des Inulins und wahlweise von Wasser zu dem geschmolzenen Fett;
- Mischen des geschmolzenen Fetts mit der Stärke und/oder dem Inulin und wahlweise Wasser bei einer Temperatur zwischen 25 °C und 85 °C, um eine Fettzusammensetzung zu ergeben;
- Abkühlen der Fettzusammensetzung auf eine Temperatur von unter 25 °C, um die Fettzusammensetzung zu verfestigen;
- Einfrieren der verfestigten Fettzusammensetzung auf eine Temperatur von unter null °C;
- Reduzieren der gefrorenen verfestigten Fettzusammensetzung auf Partikel, die eine durchschnittliche Partikelgröße von 2-20 mm aufweisen;
wobei das Fett bei einer Temperatur von 25 °C oder darunter fest ist.

3. Verfahren zum Fertigen eines geformten Fleischanalogprodukts nach Anspruch 1 oder 2, wobei das Herstellen einer strukturierten Pflanzenproteinzusammensetzung die Schritte umfasst:
- Vorbereiten eines nasstexturierten Pflanzenproteins durch Nassmachen eines trockenen texturierten Pflanzenproteins mit Wasser oder durch Nassextrudieren eines Pflanzenproteins;
- Herstellen des Bindemittels durch Mischen einer Cellulose, eines nicht texturierten Pflanzenproteinisolats, einer gelatinierten Stärke, einer Pflanzenfaser oder einer Kombination davon mit Wasser in eine Paste;
- Mischen des nasstexturierten Pflanzenproteins und des Bindemittels mit wahlweise Zugeben einer Aromastoffverbindung, einer Farbstoffverbindung und/oder einem Öl, das bei 25 °C flüssig ist, um die strukturierte Pflanzenproteinzusammensetzung zu ergeben.

4. Verfahren zum Fertigen eines geformten Fleischanalogprodukts nach einem der vorstehenden Ansprüche, wobei das geformte Fleischanalogprodukt keinen Inhaltsstoff eines tierischen Ursprungs umfasst.

5. Verfahren zum Fertigen eines geformten Fleischanalogprodukts nach einem der vorstehenden Ansprüche, wobei das texturierte Pflanzenprotein aus Sojabohnenprotein, Erbsenprotein, Linsenprotein, Lupinenbohnenprotein, Weizengluten und einer Kombination davon ausgewählt ist.

6. Verfahren zum Fertigen eines geformten Fleischanalogprodukts nach einem der vorstehenden Ansprüche, wobei das Fett ein Pflanzenfett ist, das aus Kokosfett, Palmfett, Sheabutter und einer Kombination davon ausgewählt ist.

7. Verfahren zum Fertigen eines geformten Fleischanalogprodukts nach einem der vorstehenden Ansprüche, wobei die Stärke der strukturierten Fettzusammensetzung eine physikalisch verarbeitete Stärke ist.

8. Verfahren zum Fertigen eines geformten Fleischanalogprodukts nach Anspruch 7, wobei die Stärke eine Schüttdichte von unter 50 g/100 ml, vorzugsweise eine Schüttdichte von 8-40 g/100 ml, mehr bevorzugt von 10-30 g/100 ml, noch mehr bevorzugt von 11-20 g/100 ml aufweist.

9. Verfahren zum Fertigen eines geformten Fleischanalogprodukts nach einem der vorstehenden Ansprüche, wobei die strukturierte Fettzusammensetzung mindestens 20 % Fett umfasst.

10. Verfahren zum Fertigen eines geformten Fleischanalogprodukts nach einem der vorstehenden Ansprüche, wobei das geformte Fleischanalogprodukt mindestens 5 % der strukturierten Fettzusammensetzung und mindestens 50 % der strukturierten Pflanzenproteinzusammensetzung umfasst.

11. Verfahren zum Fertigen eines geformten Fleischanalogprodukts nach einem der vorstehenden Ansprüche, wobei das geformte Fleischanalogprodukt ein visuelles Erscheinungsbild eines durchwachsenen Produkts aufweist.

12. Verfahren zum Fertigen eines geformten Fleischanalogprodukts nach Anspruch 11, wobei, nach einer Wärmebehandlung bei 80 °C für mindestens 15 Minuten, das durchwachsene Erscheinungsbild des geformten Fleischanalogprodukts verschwindet.

13. Verfahren zum Fertigen eines geformten Fleischanalogprodukts nach einem der vorstehenden Ansprüche, wobei das geformte Fleischanalogprodukt roh ist und vor einem Verzehr ein Kochen erfordert.

14. Verfahren zum Fertigen eines geformten Fleischanalogprodukts nach einem der vorstehenden Ansprüche, wobei das geformte Fleischanalogprodukt ein Bratling, ein Klößchen oder eine Wurst ist.

## Revendications

1. Procédé de fabrication d'un produit analogue de viande mis en forme comprenant les étapes consistant à :
- élaborer une composition de matière grasse structurée ;
- élaborer une composition de protéines végétales structurée ;
- mélanger la composition de matière grasse structurée avec la composition de protéines végétales structurée pour obtenir une base d'analogue de viande ;
- couler la base d'analogue de viande en une forme ;
dans lequel la composition de matière grasse structurée comprend une matière grasse en combinaison avec au moins 10 % d'amidon et/ou d'inuline, et facultativement de l'eau ;
dans lequel la composition de matière grasse structurée comprend des particules ayant une taille moyenne de particule de 2 à 20 mm ; et dans lequel la composition de protéines végétales structurée comprend des protéines végétales texturées, un liant et facultativement un composé aromatisant et/ou un composé colorant.

2. Procédé de fabrication d'un produit analogue de viande mis en forme selon la revendication 1, dans lequel l'élaboration d'une composition de matière grasse structurée comprend les étapes consistant à :
- faire fondre la matière grasse à une température supérieure à 25 °C ;
- ajouter l'amidon et/ou l'inuline et facultativement de l'eau à la matière grasse fondue ;
- mélanger la matière grasse fondue avec l'amidon et/ou l'inuline et facultativement l'eau à une température comprise entre 25 °C et 85 °C pour obtenir une composition de matière grasse ;
- refroidir la composition de matière grasse à une température inférieure à 25 °C pour que la composition de matière grasse se solidifie ;
- congeler la composition de matière grasse solidifiée à une température sous 0 °C ;
- réduire la composition de matière grasse solidifiée congelée en particules ayant une taille moyenne de particule de 2 à 20 mm ;
dans lequel la matière grasse est solide à une température inférieure ou égale à 25 °C.

3. Procédé de fabrication d'un produit analogue de viande mis en forme selon la revendication 1 ou 2, dans lequel l'élaboration d'une composition de protéines végétales structurée comprend les étapes consistant à :
- préparer des protéines végétales texturées humides par mouillage de protéines végétales texturées sèches avec de l'eau ou par extrusion de protéines végétales en voie humide ;
- élaborer le liant en mélangeant une cellulose, un isolat de protéines végétales non texturées, un amidon gélatinisé, des fibres végétales, ou une combinaison de ceux-ci, avec de l'eau en une pâte ;
- mélanger les protéines végétales texturées humides et le liant avec facultativement l'ajout d'un composé aromatisant, d'un composé colorant et/ou d'une huile qui est liquide à 25 °C, pour obtenir la composition de protéines végétales structurée.

4. Procédé de fabrication d'un produit analogue de viande mis en forme selon l'une des revendications précédentes, dans lequel le produit analogue de viande mis en forme ne comprend pas d'ingrédient d'origine animale.

5. Procédé de fabrication d'un produit analogue de viande mis en forme selon l'une des revendications précédentes, dans lequel les protéines végétales texturées sont choisies parmi protéines de fèves de soja, protéines de pois, protéines de lentilles, protéines de fèves de lupin, gluten de blé, ou une combinaison de ceux-ci.

6. Procédé de fabrication d'un produit analogue de viande mis en forme selon l'une des revendications précédentes, dans lequel la matière grasse est une matière grasse végétale choisie parmi matière grasse de noix de coco, matière grasse de palme, beurre de karité, et une combinaison de ceux-ci.

7. Procédé de fabrication d'un produit analogue de viande mis en forme selon l'une des revendications précédentes, dans lequel l'amidon de la composition de matière grasse structurée est un amidon physiquement transformé.

8. Procédé de fabrication d'un produit analogue de viande mis en forme selon la revendication 7, dans lequel l'amidon a une masse volumique apparente inférieure à 50 g/100 ml, de préférence une masse volumique apparente allant de 8 à 40 g/100 ml, plus préférablement allant de 10 à 30 g/100 ml, encore plus préférablement allant de 11 à 20 g/100 ml.

9. Procédé de fabrication d'un produit analogue de viande mis en forme selon l'une des revendications précédentes, dans lequel la composition de matière grasse structurée comprend au moins 20 % de matière grasse.

10. Procédé de fabrication d'un produit analogue de viande mis en forme selon l'une des revendications précédentes, dans lequel le produit analogue de viande mis en forme comprend au moins 5 % de la composition de matière grasse structurée et au moins 50 % de la composition de protéines végétales structurée.

11. Procédé de fabrication d'un produit analogue de viande mis en forme selon l'une des revendications précédentes, dans lequel le produit analogue de viande mis en forme a un aspect visuel d'un produit marbré.

12. Procédé de fabrication d'un produit analogue de viande mis en forme selon la revendication 11, dans lequel après un traitement thermique à 80 °C pendant au moins 15 minutes, l'aspect marbré du produit analogue de viande mis en forme disparaît.

13. Procédé de fabrication d'un produit analogue de viande mis en forme selon l'une des revendications précédentes, dans lequel le produit analogue de viande mis en forme est cru et requiert une cuisson avant consommation.

14. Procédé de fabrication d'un produit analogue de viande mis en forme selon l'une des revendications précédentes, dans lequel le produit analogue de viande mis en forme est une galette, une boulette ou une saucisse.
